# EUROPÄISCHE PATENTSCHRIFT

(11) **EP 3 492 860 B1**
(45) Veröffentlichungstag und Bekanntmachung des Hinweises auf die Patenterteilung: **11.03.2020**
(21) Anmeldenummer: 18207699.2
(22) Anmeldetag: 22.11.2018
(51) Int. Cl.: G01B 11/00, G01B 11/14, G01B 11/24

(54) **SYSTEM UND VERFAHREN ZUR ERFASSUNG UND DARSTELLUNG VON MESSPUNKTEN AUF EINER KÖRPERFLÄCHE**
SYSTEM AND METHOD FOR CAPTURE AND VISUALIZATION OF MEASUREMENT POINTS ON A BODY SURFACE
SYSTÈME ET PROCÉDÉ DE DÉTECTION ET DE PRÉSENTATION DES POINTS DE MESURE SUR UNE SURFACE CORPORELLE

(30) Priorität: 01.12.2017 DE 102017128588
(43) Veröffentlichungstag der Anmeldung: 05.06.2019
(73) Patentinhaber: Prüftechnik Dieter Busch GmbH, 85737 Ismaning (DE)
(72) Erfinder: Schmidt, Holger, 85774 Unterföhring (DE)

(56) Entgegenhaltungen:
- EP-A1- 2 998 694
- US-A1- 2015 373 321

## Beschreibung

Die Erfindung betrifft ein System und Verfahren zur Erfassung und Darstellung von Messpunkten auf einer Fläche eines Körpers.

Die geometrische Vermessung von Körperflächen kann beispielsweise dazu dienen, um Messpunkte auf der Körperfläche hinsichtlich ihrer Lage bezüglich eines Referenzpunktes, einer Referenzlinie oder einer Referenzebene innerhalb oder außerhalb des Körpers zu bewerten. Beispielsweise können Punkte der Körperfläche hinsichtlich ihrer Planarität bezüglich einer Referenzebene analysiert werden.

In der EP 2 998 694 A9 ist ein Verfahren zum Bestimmen der 3D-Koordinaten eines Objekts mittels eines 3D-Messgeräts beschrieben, wobei das 3D-Messgerät mit einer Datenbrille verbunden ist, welche dazu dient, Daten betreffend die 3D-Koordinatenmessung mittels eines Displays dem Nutzer darzubieten, wobei die Daten mit von der Datenbrille aufgenommenen Bilder oder Videos überlagert werden können, um eine "Augmented-Reality" Darstellung zu ermöglichen.

In der EP 2 916 099 A1 ist ein ähnliches System beschrieben, bei welchem die 3D-Koordinatenerfassung mittels eines gelenkigen Arms erfolgt und Ergebnisse mittels einer Datenbrille dargestellt werden.

In der WO 2014/014786 A1 ist ein System beschrieben, welches Daten direkt auf eine Oberfläche eines Körpers projiziert, um eine Augmented-Reality-Funktion zu erzielen.

In der DE 10 2008 020 771 A1 ist ein Verfahren zum Bestimmen von Abweichungen zwischen einem Soll-Zustand und einem Ist-Zustand eines Werkstücks beschrieben, wobei entsprechende Daten mittels einer Datenbrille lagerichtig auf dem Werkstück dargestellt werden, und wobei die Position und Blickrichtung des die Datenbrille tragenden Nutzers mittels eines in die Datenbrille integrierten Trackingsensors erfasst werden können.

In der DE 10 2008 020 772 A1 ist ein ähnliches Verfahren beschrieben, wobei die Datenbrille ausgebildet ist, um vordefinierte Gesten des Nutzers zu erkennen, um darzustellende Messergebnisse anhand der erfassten Geste auszuwählen.

In der WO 2016/085682 A1 ist eine Datenbrille beschrieben, welche 3D-Koordinaten von Körpern, zum Beispiel Möbelstücken, ermittelt und dann Abstände, Flächen oder Volumina zwischen Punkten auf den Körperflächen berechnet.

In der DE 10 2015 201 290 A1 betrifft ein Verfahren zum Ausrichten zweier Körper zueinander mittels eines Laserausrichtsystems und einer damit verbundenen Datenbrille, die ein Head-up-Display ("HUD") aufweist, um dem Nutzer Informationen darzustellen, die bei der Durchführung des Ausrichtvorgangs hilfreich sind, einschließlich Messergebnissen bezüglich der Ausrichtung.

Es ist Aufgabe der vorliegenden Erfindung, ein System und Verfahren zu schaffen, welches die Erfassung und Darstellung von Messpunkten auf einer Körperfläche in besonders effizienter Weise ermöglicht.

Erfindungsgemäß gelöst wird diese Aufgabe durch ein System gemäß Anspruch 1 sowie ein Verfahren gemäß Anspruch 14.

Bei der erfindungsgemäßen Lösung wird ein Teil der Koordinaten eines jeden Messpunkts mittels einer Datenbrille erfasst oder, sofern bereits bekannt, dem Nutzer in bequemer Weise vorgegeben wird, während der restliche Teil der Koordinaten eines jeden Messpunkts mittels eines Positionsmessgeräts ermittelt wird, wobei mittels der Datenbrille ein für jeden Messpunkt mittels des mittels des Positionsmessgeräts erfassten Teils der Koordinaten abgeleitetes Ergebnis an der Position des jeweiligen Messpunkts auf der Körperfläche graphisch dargestellt wird. Da die Koordinatenerfassung mittels des Positionsmessgerät mit relativ hoher Genauigkeit und mittels der Datenbrille relativ einfach erfolgen kann, kann der Teil der Koordinaten, für den eine hohe Genauigkeit nicht erforderlich ist, auf schnelle und bequeme Weise mittels der Datenbrille erfasst bzw. vorgegeben werden kann, während der für das interessierende Ergebnis zu verwendende Teil der Koordinaten mittels des Positionsmessgeräts in hoher Genauigkeit ermittelt werden kann. Die Datenbrille sorgt ferner für eine übersichtliche, bequeme und effiziente Darstellung der Ergebnisse.

Vorzugsweise wird die Datenbrille verwendet, um die beiden Horizontalkoordinaten zu erfassen bzw. graphisch vorzugeben, während das Positionsmessgerät verwendet wird, um die Vertikalkoordinate zu erfassen.

Weitere bevorzugte Ausgestaltungen der Erfindung ergeben sich aus den Unteransprüchen.

Im Folgenden wird die Erfindung anhand der beigefügten Zeichnungen beispielhaft näher erläutert; dabei zeigen:
- Fig. 1: eine schematische Darstellung eines Beispiels eines erfindungsgemäßen Systems zur Vermessung eines Körpers; und
- Fig. 2: eine schematische Darstellung eines Beispiels einer Anzeige auf dem Display der Datenbrille des Systems von Fig. 1.

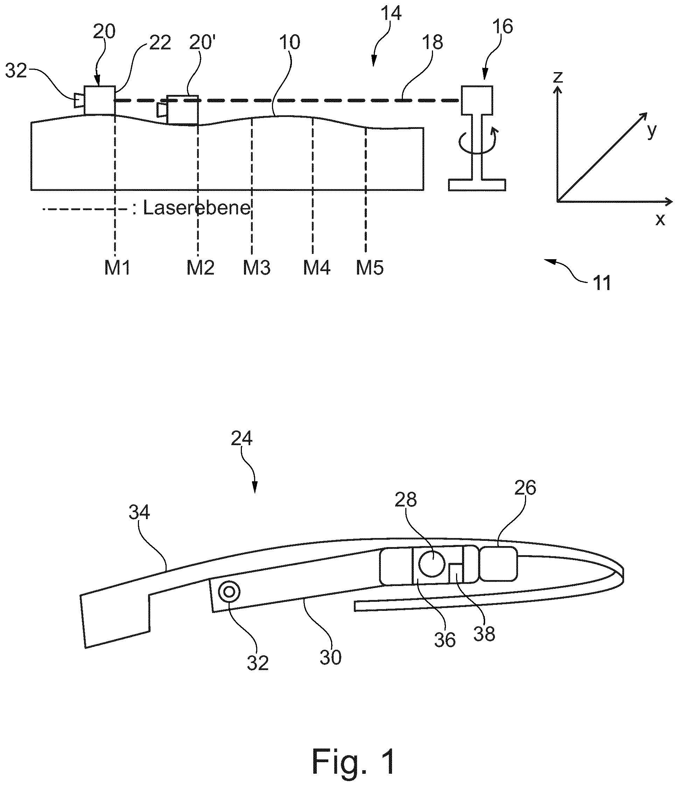

In Fig. 1 ist schematisch ein Beispiel für ein System 11 zur Erfassung und Darstellung von geometrischen Eigenschaften von Messpunkten auf einer Fläche 10 eines Körpers 12 gezeigt. Das System weist ein optisches Positionsmessgerät 14 auf, welches eine Laserlichtquelle 16 zum Aussenden eines Laserstrahls 18 sowie einen optischen Detektor 20 mit einer Sensorfläche 22 zum Erfassen der Auftreffpunkte des Laserlichts 18 der Laserlichtquelle 16 umfasst. Das System beinhaltet ferner eine Datenbrille 24 mit einem Head-Up-Display 26, einer Kamera 28, einem Prozessor 30 sowie einer drahtlose Schnittstelle 32, wobei diese Komponenten von einem Bügel 34 getragen werden. Die drahtlose Schnittstelle 32 dient zur drahtlosen Verbindung mit dem Detektor 20 des Positionsmessgeräts 14, welcher ebenfalls eine solche Schnittstelle 32 aufweist. Die Schnittstellen 32 können beispielsweise als Bluetooth-Schnittstelle ausgebildet sein. Die Datenbrille 24 weist ferner eine Positionssensoreinheit 36 auf, die zusätzlich zu der Kamera 28 noch weitere Sensoren umfassen kann, wie beispielsweise mindestens einen Beschleunigungssensor und/oder mindestens einen Drehratensensor (solche weiteren Sensoren sind in Fig. 1 bei 38 gezeigt).

Das System von Fig. 1 dient dazu, die x-, y- und z-Koordinaten in einer Mehrzahl von Messpunkten M1, M2, ... auf der Körperfläche 10 zu erfassen und ein aus mindestens einer Koordinate (typischerweise der z-Koordinate) abgeleitetes Ergebnis mittels der Datenbrille 24 an der Position des jeweiligen Messpunkts auf der Körperfläche 10 darzustellen. Dabei wird ein Teil der Koordinaten (z.B. x und y) eines jeden Messpunkts mittels der Datenbrille 24 erfasst oder, sofern diese Koordinaten schon bekannt bzw. vorgegeben sind, dem Nutzer mittels der Datenbrille 24 an der Position des Messpunkts auf der Körperfläche 10 graphisch dargestellt bzw. vorgegeben, während der restliche Teil der Koordinaten (z.B. die z-Koordinate) mittels des optischen Positionsmessgeräts 14 ermittelt wird. Typischerweise wird die Datenbrille 24 verwendet, um die beiden Horizontalkoordinaten x und y zu erfassen bzw. graphisch vorzugeben, während das optische Positionsmessgerät 14 verwendet wird, um die Vertikalkoordinate, d.h. die z-Koordinate, zu erfassen.

Sofern die x- und y-Koordinaten eines Messpunkts der Datenbrille 24 nicht bekannt sind, ermittelt die Datenbrille 24 mittels der Positionssensoreinheit 36 die x- und y-Koordinate des aktuellen Messpunkts, d.h. des Punkts, an welchem der Nutzer den optischen Detektor 20 positioniert hat (im Beispiel von Fig. 1 wäre dies der Messpunkt M1). Diese Ermittlung der x- und y-Koordinate des Messpunkts kann in an sich bekannter Weise erfolgen, indem die Datenbrille 24 ihre eigene Position und Orientierung im Raum sowie den Abstand zum aktuellen Messpunkt (hier M1) erfasst. Die Abstandsmessung kann beispielsweise durch Auswertung der visuellen Verformung eines auf die Körperflächen projizierten Gittermusters erfolgen; die Erfassung der Position und Orientierung der Datenbrille kann mit Hilfe von Beschleunigungs- und/oder Drehratensensoren erfolgen. Beispiele zur Koordinatenerfassung eines Objekts mittels einer Datenbrille sind beispielsweise in der WO 2016/085682 A2 beschrieben.

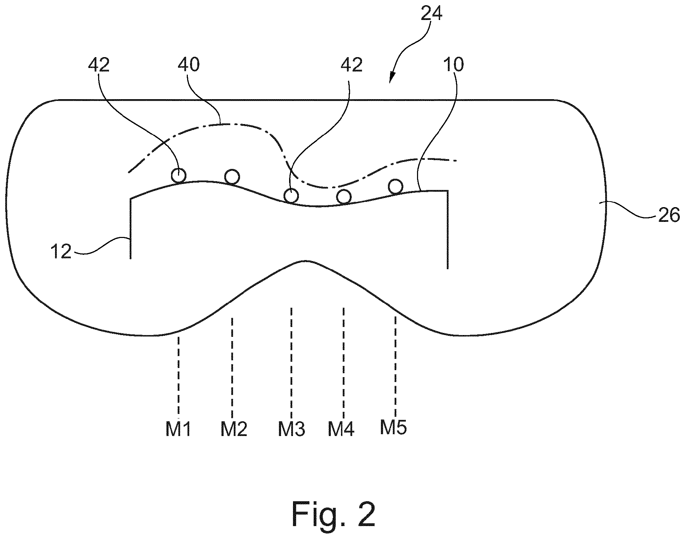

Sofern die Datenbrille 24 die x- und y-Koordinate des aktuellen Messpunkts bereits kennt (beispielsweise wenn die Messpunkte anhand eines bestimmten Schemas von außen vorgegeben sind), dann stellt die Datenbrille 24 mittels des Head-Up-Displays 26 dem Nutzer die Position des Messpunkts entsprechend der vorgegebenen Koordinaten auf der Körperfläche 10 graphisch dar, so dass der Nutzer weiß, an welche Stelle er den optischen Detektor 20 auf der Körperfläche 10 platzieren soll. Dies kann in an sich bekannter Weise unter Verwendung der Kamera 28 in Form einer "Augmented-Reality"-Darstellung erfolgen. Dabei kann die Darstellung der Position des Messpunkts beispielsweise mittels Verwendung von virtuellen 3D- oder 2D-Markierungsobjekten (in Fig. 2 mit 42 bezeichnet) auf der Körperfläche 10 erfolgen. Dabei können zum Beispiel Würfel oder Kugeln oder ein Gitter oder kleine Kreuze an der entsprechenden Position auf der Körperfläche 10 eingeblendet werden. Die Darstellung der x- und y-Position des Messpunkts auf der Körperfläche 10 erfolgt also so, dass der Nutzer der Datenbrille diese Position als auf der Körperfläche liegend wahrnimmt, z.B. durch Einblenden von Markierungen an dieser Stelle.

Nach erfolgter Platzierung des optischen Detektors 20 an dem gewünschten Messpunkt erfolgt eine Messung der z-Koordinate des Messpunkts mittels des Laserstrahls 18. Zu diesem Zweck werden die Auftreffpunkte des Laserstrahls 18 auf der Detektorfläche 22 in an sich bekannter Weise erfasst, woraus in an sich bekannter Weise die z-Koordinate des entsprechenden Messpunkts ermittelt werden kann (im Wesentlichen wird dabei ein bekannter Offset eingerechnet, der dem Abstand zwischen einem Referenzpunkt bzw. einer horizontalen Referenzlinie auf der Detektorfläche und dem Aufsetzpunkt des Detektors auf der Körperfläche entspricht). Dabei kann der Laserstrahl 18 beispielsweise eine horizontale Laserebene festlegen, indem die Laserlichtquelle 16 entsprechend rotiert, so dass die sich über den Offset aus der vertikalen Komponente des Auftreffpunkts ergebende relative z-Koordinate des Messpunkts die Lage bezüglich der von dem Laserstrahl 18 vorgegebenen horizontalen Ebene angibt.

Der Detektor 20 sendet die Daten betreffend die Auftreffpunkte des Laserstrahls 18 (oder die bereits ermittelte entsprechende z-Koordinate) über die Schnittstellen 32 an die Datenbrille 24, wo der Prozessor 30 dann als Auswertungseinheit dient, um ein Ergebnis für den Messpunkt aus der ermittelten z-Koordinate abzuleiten. Dabei kann es sich beispielsweise um den Betrag und/oder die Richtung der Abweichung von einem vorgegebenen Sollwert handeln.

Diese Vorgehensweise wird dann für die übrigen vorgesehenen Messpunkte wiederholt (in Fig. 1 ist der optische Detektor z.B. am Messpunkt M2 bei 20' angedeutet).

Die Ergebnisse für die einzelnen Messpunkte werden mittels des Head-Up-Displays 26 dem Nutzer graphisch dargestellt. Dies kann beispielsweise, wie in Fig. 2 angedeutet, anhand eines Profils 40 erfolgen, welches typischerweise überzeichnet dargestellt wird, um auch kleine Abweichungen für den Nutzer deutlich wahrnehmbar darzustellen. Jeder Ergebniswert wird dabei an die Position des entsprechenden Messpunkts projiziert, wie dies in Fig. 2 angedeutet ist. Alternativ oder zusätzlich kann die Darstellung durch Farbcodierung erfolgen, d.h. die Farbe der Darstellung an dem entsprechenden Messpunkt auf der Körperfläche 10 hängt von dem für diesen Messpunkt ermittelten Ergebnis ab (dies kann beispielsweise die Abweichung der z-Koordinate von einem vorgegebenen Sollwert sein). Grundsätzlich können die Ergebnisse in Klassen eingeteilt werden, wobei die einzelnen Klassen dann graphisch unterschiedlich dargestellt werden, zum Beispiel mittels unterschiedlicher Farben. Beispielsweise können rote Bereiche der Körperfläche 10 anzeigen, dass dort eine inakzeptabel große Abweichung vom Sollwert vorliegt, während grüne Bereiche bedeuten können, dass dort die Toleranzen der Abweichung eingehalten werden.

## Patentansprüche

1. System zur Erfassung und Darstellung von Messpunkten (M1, M2, ...) auf einer Fläche (10) eines Körpers (12), mit einer Datenbrille (24) und einem Positionsmessgerät (14),
wobei die Datenbrille ein Head-up-Display (26) aufweist und ausgebildet ist, um eine oder zwei Koordinaten eines jedem Messpunkts mittels einer Positions-Sensoreinheit (28, 36, 38) der Datenbrille zu erfassen oder, sofern eine oder zwei Koordinaten eines Messpunkts der Datenbrille bereits bekannt sind, dem Nutzer die Position des Messpunkts entsprechend der bekannten Koordinate(n) mittels des Head-up-Displays auf der Körperfläche graphisch darzustellen,
wobei das Positionsmessgerät eine Laserlichtquelle (16) und einen an dem jeweiligen Messpunkt auf der Körperfläche positionierbaren optischen Detektor (20) mit einer Sensorfläche (22) zum Erfassen der Auftreffpunkte des Laserlichts der Laserlichtquelle aufweist, um die noch nicht erfassten Koordinate(n) eines jeden Messpunkts zu bestimmen, und
wobei die Datenbrille ausgebildet ist, um mittels des Head-up-Displays ein aus der mittels des Positionsmessgeräts erfassten Koordinate(n) für jeden Messpunkt abgeleitetes Ergebnis an der Position des jeweiligen Messpunkts auf der Körperfläche graphisch darzustellen.

2. System gemäß Anspruch 1, **dadurch gekennzeichnet, dass** die Datenbrille (24) ausgebildet ist, um zwei Koordinaten zu erfassen bzw. graphisch darstellen, wobei das Positionsmessgerät (14) ausgebildet ist, um nur die dritte Koordinate zu erfassen.

3. System gemäß Anspruch 2, **dadurch gekennzeichnet, dass** die Datenbrille (24) ausgebildet ist, um beide Horizontalkoordinaten zu erfassen bzw. graphisch darstellen, wobei das Positionsmessgerät (14) ausgebildet, um nur die Vertikalkoordinate zu erfassen.

4. System gemäß einem der vorhergehenden Ansprüche, **dadurch gekennzeichnet, dass** es sich bei dem Ergebnis um den Betrag und/oder die Richtung der Abweichung von einem vorgegebenen Sollwert handelt.

5. System gemäß einem der vorhergehenden Ansprüche, **dadurch gekennzeichnet, dass** die Datenbrille ausgebildet ist, um die Ergebnisse in Klassen einzuteilen und die Klassen graphisch unterschiedlich darzustellen.

6. System gemäß einem der vorhergehenden Ansprüche, **dadurch gekennzeichnet, dass** die Datenbrille (24) ausgebildet ist, um die Ergebnisse farbcodiert darzustellen.

7. System gemäß einem der vorhergehenden Ansprüche, **dadurch gekennzeichnet, dass** die Datenbrille (24) ausgebildet ist, um dem Nutzer die Position des Messpunkts entsprechend der bekannten Koordinate(n) mittels eingeblendeten virtuellen 3D- oder 2D-Markierungsobjekten auf der Körperfläche (10) graphisch darzustellen.

8. System gemäß einem der vorhergehenden Ansprüche, **dadurch gekennzeichnet, dass** die Ableitung der Ergebnisse in einer Auswertungseinheit (30) der Datenbrille (24) erfolgt.

9. System gemäß einem der vorhergehenden Ansprüche, **dadurch gekennzeichnet, dass** die Datenbrille (24) und das Positionsmessgerät (14) jeweils eine drahtlose Schnittstelle (32) aufweisen, um über eine drahtlose Verbindung kommunizieren.

10. System gemäß einem der vorhergehenden Ansprüche, **dadurch gekennzeichnet, dass** die Positions-Sensoreinheit (28, 36, 38) der Datenbrille (24) ausgebildet, um die Messpunktkoordinate(n) zu erfassen, indem die Datenbrille ihre eigene Position und Orientierung im Raum sowie den Abstand zu dem jeweiligen Messpunkt erfasst.

11. System gemäß Anspruch 10, **dadurch gekennzeichnet, dass** die Positions-Sensoreinheit (28, 36, 38) der Datenbrille ausgebildet ist, den Abstand zu dem jeweiligen Messpunkt zu erfassen, indem die visuelle Verformung eines auf die Körperfläche projizierten Gittermusters ausgewertet wird.

12. System gemäß Anspruch 10 oder 11, **dadurch gekennzeichnet, dass** die Positions-Sensoreinheit der Datenbrille (24) eine Kamera (28), mindesten einen Beschleunigungssensor (38) und/oder mindestens einen Drehratensensor aufweist, um Position und Orientierung der Datenbrille im Raum zu erfassen.

13. System gemäß einem der vorhergehenden Ansprüche, **dadurch gekennzeichnet, dass** das Positionsmessgerät (14) ausbildet ist, um mittels des Laserstrahls (18) eine horizontale Laserebene festzulegen und die vertikale Messpunktkoordinate eines jeden Messpunkts bzgl. der Laserebene anhand der Auftreffpunkte des Laserstrahls auf der Sensorfläche zu erfassen.

14. Verfahren zur Erfassung und Darstellung von Messpunkten auf einer Fläche (10) eines Körpers (12) unter Verwendung einer Datenbrille (24) mit Head-up-Display (26) und eines Positionsmessgeräts (14) mit einer Laserlichtquelle (18) und einem an dem jeweiligen Messpunkt auf der Körperfläche positionierbaren optischen Detektor (20) mit einer Sensorfläche (22) zum Erfassen der Auftreffpunkte des Laserlichts der Laserlichtquelle, wobei
eine oder zwei Koordinaten eines jedem Messpunkts mittels einer Positions-Sensoreinheit (28, 36, 38) der Datenbrille erfasst werden oder, sofern eine oder zwei Koordinaten eines Messpunkts der Datenbrille bereits bekannt sind, dem Nutzer die Position des Messpunkts entsprechend der bekannten Koordinate(n) mittels des Head-up-Displays auf der Körperfläche graphisch dargestellt wird;
der optische Detektor an dem jeweiligen Messpunkt auf der Körperfläche positioniert wird und die noch nicht erfassten Koordinate(n) des Messpunkts anhand des Auftreffpunkts bzw. der Auftreffpunkte des Laserlichts auf der Sensorfläche bestimmt wird bzw. werden; und
aus der mittels des Positionsmessgeräts erfassten Koordinate(n) für jeden Messpunkt ein Ergebnis abgeleitet wird und dem Nutzer mittels der Datenbrille an der Position des jeweiligen Messpunkts auf der Körperfläche graphisch dargestellt wird.

## Claims

1. System for capturing and displaying measurement points (M1, M2, ...) on a surface (10) of a body (12), comprising a pair of smart glasses (24) and a position measurement apparatus (14),
wherein the pair of smart glasses comprises a head-up display (26) and is designed to capture one or two coordinates of each measurement point by means of a position sensor unit (28, 36, 38) of the pair of smart glasses or, if one or two coordinates of a measurement point are already known to the pair of smart glasses, graphically display the position of the measurement point in accordance with the known coordinate (s) to the user by means of the head-up display on the body surface,
wherein the position measurement apparatus comprises a laser light source (16) and an optical detector (20), which is positionable at the respective measurement point on the body surface, comprising a sensor surface (22) to capture the points of incidence of the laser light of the laser light source, in order to determine the coordinate(s), which are not yet captured, of each measurement point, and
wherein the pair of smart glasses is designed to graphically display a result derived from the coordinate (s), captured by means of the position measurement apparatus, for every measurement point at the position of the respective measurement point on the body surface by means of the head-up display.

2. System according to Claim 1, **characterized in that** the pair of smart glasses (24) is designed to capture or graphically display two coordinates, wherein the position measurement apparatus (14) is designed to capture only the third coordinate.

3. System according to Claim 2, **characterized in that** the pair of smart glasses (24) is designed to capture or graphically display both horizontal coordinates, wherein the position measurement apparatus (14) is designed to capture only the vertical coordinate.

4. System according to one of the preceding claims, **characterized in that** the result is the absolute value and/or the direction of the deviation from a target value.

5. System according to one of the preceding claims, **characterized in that** the pair of smart glasses is designed to divide the results into classes and to display the classes graphically in different ways.

6. System according to one of the preceding claims, **characterized in that** the pair of smart glasses (24) is designed to display the results in a colour-coded way.

7. System according to one of the preceding claims, **characterized in that** the pair of smart glasses (24) is designed to graphically display the position of the measurement point in accordance with the known coordinate(s) to the user by means of superimposed virtual 3D- or 2D-markers on the body surface (10).

8. System according to one of the preceding claims, **characterized in that** the derivation of the results takes place in an evaluation unit (30) of the pair of smart glasses (24).

9. System according to one of the preceding claims, **characterized in that** the pair of smart glasses (24) and the position measurement apparatus (14) comprise in each case a wireless interface, to communicate over a wireless connection.

10. System according to one of the preceding claims, **characterized in that** the position sensor unit (28, 36, 38) of the pair of smart glasses (24) is designed to capture the measurement point coordinate(s) by virtue of the pair of smart glasses capturing their own position and orientation in space and also the distance to the respective measurement point.

11. System according to Claim 10, **characterized in that** the position sensor unit (28, 36, 38) of the pair of smart glasses is designed to capture the distance to the respective measurement point by virtue of the visual deformation of a grid pattern projected on the body surface being evaluated.

12. System according to Claim 10 or 11, **characterized in that** the position sensor unit of the pair of smart glasses (24) comprises a camera (28), at least one accelerometer (38) and/or at least one angular rate sensor, in order to capture position and orientation of the pair of smart glasses in space.

13. System according to one of the preceding claims, **characterized in that** the position measurement apparatus (14) is designed to establish a horizontal laser plane by means of the laser beam (18) and to capture the vertical measurement point coordinate of each measurement point relative to the laser plane by means of the points of incidence of the laser beam on the sensor surface.

14. Method for capturing and displaying measurement points on a surface (10) of a body (12) using a pair of smart glasses (24) comprising a head-up display (26) and a position measurement apparatus (14) comprising a laser light source (18) and an optical detector (20), which is positionable at the respective measurement point on the body surface, comprising a sensor surface (22) to capture the points of impact of the laser light of the laser light source, wherein
one or two coordinates of each measurement point are captured by means of a position sensor unit (28, 36, 38) of the pair of smart glasses or, if one or two coordinates of a measurement point are already known to the pair of smart glasses, the position of the measurement point in accordance with known coordinate(s) is graphically displayed to the user by means of the head-up display on the body surface. the optical detector is positioned at the respective measurement point on the body surface and the coordinate(s), which are not yet captured, of the measurement point is or are determined by means of the point of incidence or the points of incidence of the laser light on the sensor surface; and
a result is derived from the coordinate(s), captured by means of the position measurement apparatus, for every measurement point and is graphically displayed to the user by means of the pair of smart glasses at the position of the respective measurement point on the body surface.

## Revendications

1. Système de détection et de présentation de points de mesure (M1, M2, ...) sur une surface (10) d'un corps (12) avec des lunettes de données (24) et un appareil de mesure de position (14),
dans lequel les lunettes de données comportent un affichage tête haute (26) et sont conçues pour détecter une ou deux coordonnées de chaque point de mesure au moyen d'une unité à capteur de position (28, 36, 38) des lunettes de données ou, si une ou deux coordonnées d'un point de mesure des lunettes de données sont déjà connues, pour présenter graphiquement à l'utilisateur la position du point de mesure selon la ou les coordonnée(s) connue(s) au moyen de l'affichage tête haute sur la surface corporelle,
dans lequel l'appareil de mesure de position comporte une source de lumière laser (16) et un détecteur optique (20) pouvant être positionné sur la surface corporelle au point de mesure respectif et comprenant une surface de capteur (22) destinée à détecter les points d'incidence de la lumière laser de la source de lumière laser afin de déterminer la ou les coordonnée(s) non encore détectée(s) de chaque point de mesure, et
dans lequel les lunettes de données sont conçues pour présenter graphiquement, au moyen de l'affichage tête haute, un résultat déterminé pour chaque point de mesure à partir de la ou des coordonnée(s) détectée(s) au moyen de l'appareil de mesure de position à la position du point de mesure respectif sur la surface corporelle.

2. Système selon la revendication 1, **caractérisé en ce que** les lunettes de données (24) sont conçues pour détecter ou présenter graphiquement deux coordonnées, dans lequel l'appareil de mesure de position (14) est conçu pour détecter uniquement la troisième coordonnée.

3. Système selon la revendication 2, **caractérisé en ce que** les lunettes de données (24) sont conçues pour détecter ou présenter graphiquement les deux coordonnées horizontales, dans lequel l'appareil de mesure de position (14) est conçu pour détecter uniquement la coordonnée verticale.

4. Système selon l'une des revendications précédentes, **caractérisé en ce que** le résultat est la valeur et/ou la direction de l'écart par rapport à une valeur de consigne prédéterminée.

5. Système selon l'une des revendications précédentes, **caractérisé en ce que** les lunettes de données sont conçues pour répartir les résultats en classes et pour présenter graphiquement les classes de manière différente.

6. Système selon l'une des revendications précédentes, **caractérisé en ce que** les lunettes de données (24) sont conçues pour présenter les résultats sous forme codée en couleur.

7. Système selon l'une des revendications précédentes, **caractérisé en ce que** les lunettes de données (24) sont conçues pour présenter graphiquement à l'utilisateur la position du point de mesure selon la ou les coordonnée(s) connue(s) au moyen d'objets de marquage virtuels 3D ou 2D superposés sur la surface corporelle (10) .

8. Système selon l'une des revendications précédentes, **caractérisé en ce que** la détermination des résultats est effectuée dans une unité d'évaluation (30) des lunettes de données (24).

9. Système selon l'une des revendications précédentes, **caractérisé en ce que** les lunettes de données (24) et l'appareil de mesure de position (14) comportent chacun une interface sans fil (32), pour communiquer par l'intermédiaire d'une liaison sans fil.

10. Système selon l'une des revendications précédentes, **caractérisé en ce que** l'unité à capteur de position (28, 36, 38) des lunettes de données (24) est conçue pour détecter la ou les coordonnée(s) du point de mesure, en faisant en sorte que les lunettes de données détectent leurs position et orientation propres dans l'espace ainsi que la distance par rapport au point de mesure respectif.

11. Système selon la revendication 10, **caractérisé en ce que** l'unité à capteur de position (28, 36, 38) des lunettes de données est conçue pour détecter la distance par rapport au point de mesure respectif en évaluant la déformation visuelle d'un motif de grille projeté sur la surface corporelle.

12. Système selon la revendication 10 ou 11, **caractérisé en ce que** l'unité à capteur de position des lunettes de données (24) comprend une caméra (28), au moins un capteur d'accélération (38) et/ou au moins un capteur de vitesse de rotation, pour détecter la position et l'orientation des lunettes de données dans l'espace.

13. Système selon l'une des revendications précédentes, **caractérisé en ce que** l'unité à capteur de position (14) est conçue pour définir un plan laser horizontal au moyen du faisceau laser (18) et pour détecter la coordonnée de point de mesure verticale de chaque point de mesure par rapport au plan laser sur la base des points d'incidence du faisceau laser sur la surface du capteur.

14. Procédé de détection et d'affichage de points de mesure sur une surface (10) d'un corps (12) à l'aide de lunettes de données (24) comportant un affichage tête haute (26) et d'un appareil de mesure de position (14) comportant une source de lumière laser (18) et un détecteur optique (20) pouvant être positionné sur la surface corporelle au point de mesure respectif et comprenant une surface de capteur (22) destinée à détecter les points d'incidence de la lumière laser de la source de lumière laser, dans lequel
une ou deux coordonnées de chaque point de mesure sont détectées au moyen d'une unité à capteur de position (28, 36, 38) des lunettes de données ou, si une ou deux coordonnées d'un point de mesure des lunettes de données sont déjà connues, la position du point de mesure correspondant à la ou aux coordonnée(s) connue(s) est présentée graphiquement à l'utilisateur au moyen de l'affichage tête haute sur la surface corporelle ;
le détecteur optique est positionné au point de mesure respectif sur la surface corporelle et la ou les coordonnée(s) non encore détectée(s) du point de mesure est ou sont déterminée (s) sur la base du point d'incidence ou des points d'incidence de la lumière laser sur la surface du capteur ; et
un résultat est déterminé pour chaque point de mesure à partir de la ou des coordonnée (s) détectée (s) au moyen de l'appareil de mesure de position et est présenté graphiquement à l'utilisateur au moyen des lunettes de données à la position du point de mesure respectif sur la surface corporelle.
